# FASCICULE DE BREVET EUROPEEN

(11) **EP 1 141 484 B1**
(45) Date de publication et mention de la délivrance du brevet: **20.05.2009**
(21) Numéro de dépôt: 00962609.4
(22) Date de dépôt: 12.09.2000
(51) Int. Cl.: D21H 25/02, C09K 17/52

(54) **PROCEDE DE DEGRADATION ACCELEREE DE PAPIER DE PAILLAGE ET PAPIER DE PAILLAGE**
VERFAHREN ZUM BESCHLEUNIGTEN ABBAU VON MULCHPAPIER, UND MULCHPAPIER
METHOD FOR ACCELERATED DEGRADATION OF MULCH PAPER AND MULCH PAPER

(30) Priorité: 05.10.1999 FR 9912600
(43) Date de publication de la demande: 10.10.2001
(73) Titulaire: Ahlstrom Corporation, 00180 Helsinki (FI)
(72) Inventeur: DUSSAUD, Joseph, F-38200 Vienne (FR); BOUVIER, Léonie, F-38440 Beauvoir de Marc (FR)
(74) Mandataire: Vuillermoz, Bruno
(86) Numéro de dépôt international: PCT/FR2000/002510
(87) Numéro de publication internationale: WO 2001/025536

(56) Documents cités:
- DE-A- 4 342 514
- FR-A- 2 016 071
- GB-A- 370 482
- US-A- 5 853 541

## Description

L'invention concerne un procédé de dégradation de papier de paillage, de même que le papier de paillage pour la mise en oeuvre du procédé. Comme il sera décrit par la suite, l'invention vise également une solution enzymatique pour la mise en oeuvre dudit procédé.

Dans la suite de la description, le procédé de dégradation, de même que le papier de paillage de l'invention, sont plus particulièrement décrits en relation avec le paillage des salades.

Cependant, le papier s'applique au paillage de tout type de plantes, tels que fraisiers, vignes, tomates, courgettes, aubergines, poivrons, concombres, échalotes, etc....

Plusieurs matériaux de paillage ont été proposés.

On connaît tout d'abord les feuilles plastiques noires qui présentent l'avantage d'être solides, malgré leur faible grammage, et ainsi résistantes aux intempéries. Cependant, ces feuilles de plastique présentent un certain nombre d'inconvénients dont notamment celui de ne pas être biodégradables. Pour des raisons écologiques évidentes, le plastique ne peut être enfoui dans le sol. Dès lors, lorsque la récolte est terminée et que le cultivateur souhaite labourer son terrain, il doit retirer complètement le plastique. Le coût de cette opération est estimée à 20 % du coût total du paillage.

Par ailleurs, le plastique s'échauffant très vite au contact des rayons solaires, les feuilles de salades proches du sol collent et restent collées au film de paillage et ne sont donc retirées qu'avec le retrait de ce film. On estime que le retrait d'une tonne de plastique entraîne le retrait d'une tonne de végétaux et de terre restés accrochés audit plastique. Dès lors, le plastique est pratiquement non recyclable, les frais de lavage étant rédhibitoires pour une telle opération.

Pour résoudre ces différents problèmes, ont été parallèlement développés des papiers de paillage. Ces papiers, plus particulièrement décrits dans les documents FR-A-2 016 071 sont traités par des résines urée-formaldéhyde, de sorte à augmenter leur résistance à l'état mouillé, et ainsi diminuer le risque de déchirure lors de l'utilisation sur le terrain.

Cependant, malgré ce traitement, le papier peut casser sous l'effet des phases d'arrosage, qui détendent le papier, et des phases de séchage qui retendent le papier.

Par ailleurs, et surtout, le traitement du papier par des résines hydrophobes conduit inévitablement à ralentir sa biodégradabilité. On a en effet constaté que la biodégradabilité complète de ces types de papier est atteinte au bout de 2 ans seulement.

En d'autres termes, on se trouve confronté au problème complexe qui est celui de mettre en oeuvre un papier de paillage résistant aux intempéries sur une période déterminée, tout en étant susceptible d'être dégradé à l'issue de la récolte en un temps minimum.

Pour résoudre ce problème, le Demandeur a développé un procédé de dégradation accéléré de papier de paillage, dont les fibres de cellulose sont imprégnées d'une résine hydrophobe conférant audit papier un caractère de résistance aux intempéries, selon lequel on pulvérise sur le papier une solution enzymatique apte à dégrader à la fois la résine et la cellulose.

En d'autres termes, le procédé de l'invention consiste à déposer sur la zone de culture un papier, dont les fibres sont imprégnées d'une résine le rendant résistant à l'humidité, donc non déchirable, tout en étant compatible avec la durée d'utilisation. Ainsi, par exemple, s'agissant des fraises, le papier doit être maintenu pendant 9 mois sur la zone de culture, alors que cette période est seulement de 6 semaines en ce qui concerne les salades. A l'issue de la récolte, le papier est dégradé par arrosage d'une solution enzymatique, ladite solution permettant non seulement d'accélérer considérablement la vitesse de dégradation de la cellulose, mais également d'éviter toute accumulation de résine dans le sol par dégradation de celle-ci. Pour accélérer davantage encore la dégradation du papier, le terrain est ensuite labouré de sorte à enfouir le papier dans le sol.

Selon une première caractéristique du procédé de l'invention, la résine hydrophobe est choisie dans le groupe comprenant les résines urée-formaldéhydes, les résines mélamine-formaldéhydes, les résines polyamide-amine-épichlorhydrines, les résines polyéthylène-imines, les dérivés de l'amidon, seuls ou en mélange.

Ces résines sont connues de l'homme du métier et précisément décrites dans le document « le point sur... » n°11, Janvier 1986 du Centre Technique du Papier de Grenoble.

Dans une forme de réalisation avantageuse, les résines choisies sont les résines polyamide-amine-épichlorhydrines.

Par ailleurs, pour dégrader à la fois la résine mais également la cellulose, la solution enzymatique comprend des enzymes susceptibles de catalyser l'hydrolyse des liaisons résine-résine, résine-cellulose et cellulose-cellulose.

Dans la suite de la description et dans les revendications, par l'expression "liaisons résine-résine", on désigne les liaisons entre monomères de la résine susceptibles d'être hydrolysées.

De même, par l'expression "résine-cellulose", on désigne les liaisons esters reliant la résine à la cellulose.

Enfin, par l'expression "cellulose-cellulose", on désigne les liaisons glycosidiques de la cellulose.

Pour catalyser l'hydrolyse des liaisons esters reliant la résine à la cellulose, l'enzyme choisie sera une estérase.

De même, pour catalyser l'hydrolyse des liaisons glycosidiques de la cellulose, l'enzyme sera une cellulase choisie dans le groupe comprenant les exocellobiohydrolases, les endoglucanases, et les β-glucosidases, seule ou en mélange.

Enfin, le choix de l'enzyme susceptible de catalyser l'hydrolyse des liaisons entre monomères constituant la résine sera choisie en fonction de la nature desdites liaisons.

En pratique, s'agissant des résines polyamide-amine-épichlorhydrines, l'enzyme sera choisie dans le groupe comprenant les amidases et le aminases.

Comme déjà dit, l'invention se rapporte également au papier de paillage pour la mise en oeuvre du procédé précédemment décrit.

Outre le fait que le papier de paillage de l'invention doit avoir une composition telle qu'il soit susceptible d'être dégradé selon le procédé ci-avant décrit, il doit présenter par ailleurs un certain nombre de propriétés permettant son utilisation en tant que matériau de paillage.

Ainsi, le papier doit être résistant aux intempéries, telles que la pluie et le vent et aux conditions climatiques extrêmes, telles que froid, chaleur, et par conséquent, doit présenter d'excellentes propriétés mécaniques.

En conséquence, le Demandeur s'est fixé l'objectif d'obtenir un papier présentant une résistance à l'éclatement comprise entre 150 et 250 KPa.

Une autre caractéristique que doit présenter le papier est celle d'être perméable à l'eau dans la mesure où l'eau d'arrosage doit pouvoir irriguer le sol et les racines des végétaux. Cependant, les pores du papier doivent présenter un volume tel qu'ils limitent l'évaporation de la vapeur d'eau située sous le paillage et ce, afin de conserver une humidité suffisante dans le sol.

Pour obtenir de telles propriétés, le Demandeur s'est fixé pour objectif d'obtenir un papier présentant une perméabilité à l'air comprise entre 1 500 et 3 500 cm³ sur une surface de 10 cm² sous une dépression de 1 kPa en soixante secondes.

Pour remplir l'ensemble de ces objectifs, le papier de paillage de l'invention se caractérise en ce qu'il comprend une composition fibreuse comprenant en poids :
- de 40 à 60 % de pâte de papier kraft écrue de résineux, avantageusement 50% ;
- de 10 à 30 % de pâte de papier kraft écrue de feuillus, avantageusement 20% ;
- de 20 à 40 % de pâtes désencrées d'emballage, avantageusement 30 %.

Les pâtes de papier kraft écrue et leur mode de fabrication sont parfaitement connus de l'homme du métier. De même, les pâtes désencrées d'emballage sont connues comme résultant des résidus d'emballage.

Selon une autre caractéristique, le papier de paillage comprend en outre de 0,5 à 15% de résine en poids par rapport au poids du papier, avantageusement de 7 à 8% de résine.

Pour une concentration inférieure à 0,5 % en poids de résine, le papier n'est pas suffisamment résistant à l'humidité et se déchire lors des arrosages ou des pluies. Pour une concentration supérieure à 15 % en poids de résine, on n'obtient pas un papier présentant des caractéristiques mécaniques optimisées, de sorte que le papier devient économiquement moins intéressant.

Par ailleurs, pour éviter le développement de micro-organismes sur la surface du papier, le papier comprend en outre un agent fongistatique.

Dans une forme de réalisation avantageuse, l'agent fongistatique est réparti uniquement dans les zones de la feuille de papier destinées à être enterrées. Dans ce cas, le dépôt d'agent fongistatique est effectué au niveau de la table à papier par pulvérisation par l'intermédiaire de buses sous pression d'air.

De plus, pour augmenter la capacité d'allongement du papier lorsque la culture est arrosée, tout en évitant qu'il se casse lors du séchage, le papier se présente sous forme crêpée. Ce plissage obtenu par une opération de crêpage sur machine à papier, permet en outre d'adapter le papier, d'une part, au profil du terrain en acceptant les légères courbes de ce dernier et d'autre part, à ses variations dimensionnelles sous l'action des arrosages et séchages successifs.

L'invention se rapporte également à la solution enzymatique pour la mise en oeuvre du procédé de dégradation accélérée du papier de paillage précédemment décrit.

Bien entendu, et comme déjà dit, la composition de ladite solution enzymatique variera en fonction de la résine mise en oeuvre et de la nature des sites au niveau desquels doivent agir lesdites enzymes.

Cependant et en pratique, la solution comprend toujours des cellulases aptes à couper les liaisons cellulose-cellulose, et des estérases aptes à couper les liaisons résine-cellulose.

Selon un mode de réalisation, la solution enzymatique comprend en poids :
- de 10 à 20 % de cellulase
- de 15 à 40 % d'amidase
- de 15 à 40 % d'estérase
- de 10 à 35 % d'aminase

En pratique, la solution enzymatique est pulvérisée à raison de 0,01 à 1 g d'enzyme pure, avantageusement 0,3 à 0,4 g par m².

Dans une autre forme de réalisation de l'invention, la solution enzymatique peut être incorporée directement dans le papier, au sein de microcapsules.

Dès lors, le papier de paillage sera dégradé à l'issue de la récolte, après enfouissement dans le sol, notamment par labourage, c'est-à-dire, lorsque les parois des microcapsules renfermant la solution enzymatique seront rompues sous l'action mécanique.

Autrement dit, l'invention concerne également un papier de paillage apte à se dégrader rapidement après enfouissement dans le sol, dont les fibres de cellulose sont imprégnées d'une résine hydrophobe conférant audit papier un caractère de résistance aux intempéries, caractérisé en ce qu'il comprend en outre des microcapsules remplies d'une solution enzymatique dont les parois sont rompues lors de l'enfouissement dans le sol, libérant ainsi les enzymes aptes à catalyser à la fois l'hydrolyse de la résine, et celle de la cellulose.

La fabrication des microcapsules de solution enzymatique, de même que leur incorporation dans le papier constituent des opérations connues à la portée de l'homme du métier, et ne seront pas décrites plus en avant.

Par ailleurs, et de même que précédemment, la solution enzymatique comprend des enzymes susceptibles de catalyser l'hydrolyse des liaisons résine-résine, résine-cellulose, cellulose-cellulose.

Avantageusement, les enzymes sont choisies dans le groupe comprenant les estérases, les cellulases, les amidases et les aminases.

Pour que le papier présente une résistance aux intempéries satisfaisante, il comprend de 0,5 à 15 % en poids de résine par rapport au poids du papier, avantageusement de 7 à 8 %.

L'invention et les avantages qui en découlent ressortiront mieux des exemples de réalisation suivants.

La figure 1 représente les différents sites d'action de la solution aqueuse d'enzyme sur des fibres de cellulose enduites d'une résine polyamide-amine-épichlorhydrine.

La figure 2 représente un suivi des caractéristiques mécaniques du papier de l'invention au fil du temps.

### A/ SITE D'ACTION DE LA SOLUTION AQUEUSE ENZYMATIQUE

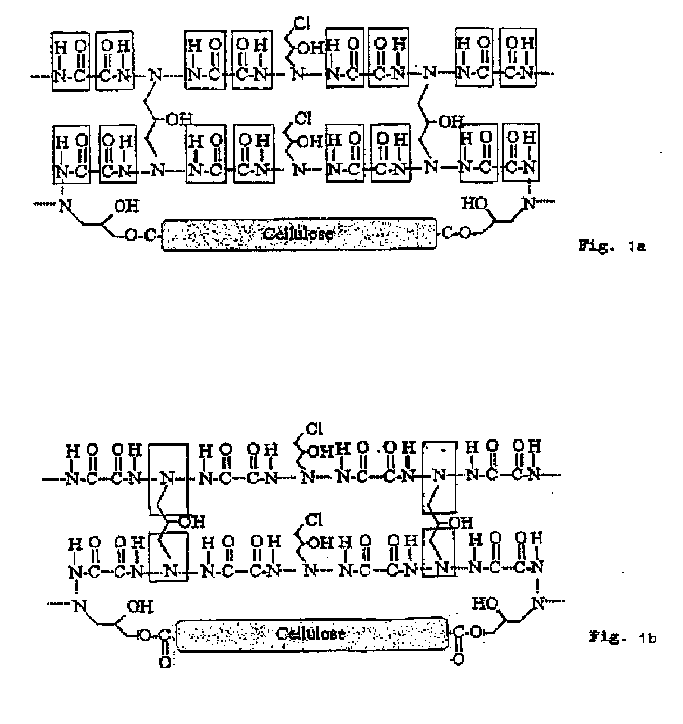

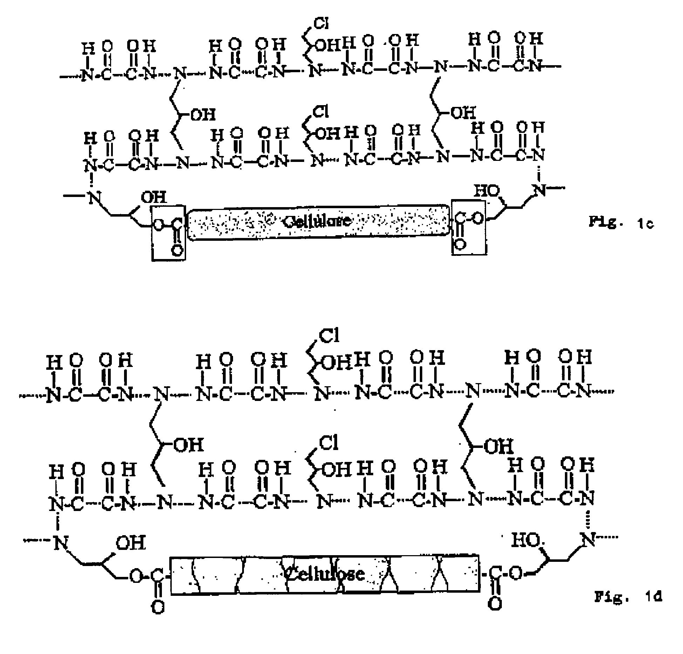

Sur la figure 1, on a représenté les différents sites d'action des enzymes contenus dans la solution enzymatique de l'invention dans le cas où les fibres de cellulose sont imprégnées d'une résine polyamide-amine-épichlorhydrine.

Sur la figure 1a, sont représentées encadrées, les liaisons amides reliant les monomères de la résine et dont l'hydrolyse, lors de l'arrosage, est catalysée par des enzymes du type amidases.

Sur la figure 1b sont représentées encadrées les liaisons amine reliant les monomères de la résine et dont l'hydrolyse, lors de l'arrosage, est catalysée par des enzymes du type aminases.

De même, sur la figure 1c, sont représentées encadrées, les liaisons esters reliant la résine à la cellulose et dont l'hydrolyse est catalysée par la présence d'enzymes du type estérase.

Enfin, sur la figure 1d, sont représentées schématiquement les liaisons glycosidiques de la cellulose dont l'hydrolyse est catalysée par la présence d'enzymes du type cellulase en particulier, les exocellobiohydrolases, les endoglucanases et les β-glucosidases.

### B/ FABRICATION DU PAPIER DE PAILLAGE DE L'INVENTION

### Exemple 1

On prépare un papier de paillage dont la composition est la suivante :
Composition fibreuse :
   - pâte kraft écrue de résineux 50 %
   - pâte kraft écrue de feuillus 20 %
   - pâtes désencrées d'emballages 30 %
Colorant :
   - noir de carbone 5,2 % par rapport à la pâte sèche
Adjuvants :
   - résine polyamide-amine-épichlorhydrine 3 % par rapport à la pâte sèche
   - amidon cationique 0,8 % par rapport à la pâte sèche

A partir de la suspension fibreuse, on forme ensuite sur une machine à papier à table plate de type FOURDRINIER une feuille de papier, dont les caractéristiques mécaniques figurent dans le tableau ci-après :

| **CARACTERISTIQUES** | | **NORMES** | **UNITES** | **RESULTATS** |
|---|---|---|---|---|
| - Grammage | | NFQ 03-019 | g/m² | 75 ± 2 |
| - Epaisseur (sous 10 mbar) | | NFQ 03-016 | micromètres | 378 |
| - Charge de rupture sèche | | | | |
| | * sens marche | NFQ 03-002 | daN/15mm | 4,55 |
| | * sens travers | NFQ 03-002 | daN/15mm | 2,95 |
| - Allongement | | | | |
| | * sens marche | NFQ 03-002 | % | 20,5 |
| - Charge de rupture humide | | | | |
| | * sens marche | NFQ 03-056 | daN/15mm | 1,78 |
| | * sens travers | NFQ 03-056 | daN/15mm | 0,96 |
| - Résistance à l'éclatement | | NFQ 03-053 | k.Pa | 160 |
| - Perméabilité à l'air | | NFQ 03-075 | cm³ (10cm²,1KPa,60s) | 2 300 |
| - Collage Cobb | | EN 20 535 | g/m² | 152 |
| - Humidité | | NFQ 03-003 | % | 5,8 |

### Exemple 2

On prépare un papier de paillage dont la composition est la suivante :
Composition fibreuse :
   - pâte kraft écrue de résineux 50 %
   - pâte kraft écrue de feuillus 20 %
   - pâtes désencrées d'emballages 30 %
Adjuvants :
   - résine mélamine formol 5,5 % par rapport à la pâte sèche
   - amidon cationique 0,8 % par rapport à la pâte sèche

Les caractéristiques mécaniques de la feuille de papier figurent dans le tableau ci-après :

| **CARACTERISTIQUES** | | **NORMES** | **UNITES** | **RESULTATS** |
|---|---|---|---|---|
| - Grammage | | NFQ 03-019 | g/m² | 80± 2 |
| - Epaisseur (sous 10 mbar) | | NFQ 03-016 | micromètres | 363 |
| - Charge de rupture sèche | | | | |
| | * sens marche | NFQ 03-002 | daN/15mm | 4,12 |
| | * sens travers | NFQ 03-002 | daN/15mm | 3,05 |
| - Allongement | | | | |
| | * sens marche | NFQ 03-002 | % | 19,5 |
| - Charge de rupture humide | | | | |
| | * sens marche | NFQ 03-056 | daN/15mm | 1,5 |
| | * sens travers | NFQ 03-056 | daN/15mm | 1,0 |
| - Résistance à l'éclatement | | NFQ 03-053 | k.Pa | 190 |
| - Perméabilité à l'air | | NFQ 03-075 | cm³ (10cm²,1KPa,60s) | 1250 |
| - Collage Cobb | | EN 20 535 | g/m² | 142 |
| - Humidité | | NFQ 03-003 | % | 5,2 |

Pour augmenter la résistance du papier aux bactéries et champignons contenus dans le sol, on pulvérise au niveau de la ligne d'eau située sur la toile de la machine à papier un produit fongistatique (FONGICIDE B-350 commercialisé par INTACE S.A.) à raison de 1 200 ppm de matière active.

La pulvérisation est effectuée par l'intermédiaire de buses sous pression d'air et régulée afin de déposer à la surface du papier des bandes de protection plus résistantes que les zones non traitées. Le produit diffusera dans la masse du papier concomitamment avec l'eau aspirée lors de l'égouttage. Dès lors, lorsque le papier sera disposé sur la zone de culture, les zones traitées seront enfouies dans le sol, tandis que les zones non traitées resteront à la surface de la terre.

On a également constaté à partir des papiers fabriqués selon les exemples 1 et 2 qu'ils permettaient de limiter les variations de températures du sol entre le jour et la nuit d'environ 4 à 5°.

Ainsi, un relevé de température à 5 cm du niveau du sol cultivé entre un paillage plastique et un paillage tel que proposé dans les exemples 1 et 2 conduit aux variations de température suivantes :

| | **JOUR** | **NUIT** | **VARIATION DE TEMPERATURE** |
|---|---|---|---|
| Plastique | 27°C | 12° C | 15° C |
| Papier noir breveté | 25° C | 14° C | 11 ° C |

Une telle propriété du papier est très avantageuse dans la mesure où plus les variations de température sont limitées entre le jour et la nuit et plus la croissance des végétaux est importante.

### C) SUIVI DES PROPRIETES MECANIQUES DU PAPIER DE L'INVENTION

Différents essais ont été réalisés afin d'évaluer les propriétés mécaniques du papier de l'invention.

Pour ce faire, on remplit des bacs de terreau sur lesquels on positionne la feuille de paillage de l'invention, en enterrant chacune de ses extrémités dans la terre.

Dès lors, la feuille de paillage présente une partie dite "hors sol" et une partie enterrée.

Sur la partie hors sol ont été évalués différents paramètres à savoir la résistance à la traction et le développement de champignons.

Sur la partie enterrée, ont été évalués la résistance à la déchirure du papier au niveau de la surface du sol, la résistance à la traction, la dégradation et le développement de champignons.

Ces différents paramètres ont été étudiés dans des conditions spécifiques, à savoir une température de 28° C et une atmosphère saturée en humidité supérieure à 95 % d'humidité relative.

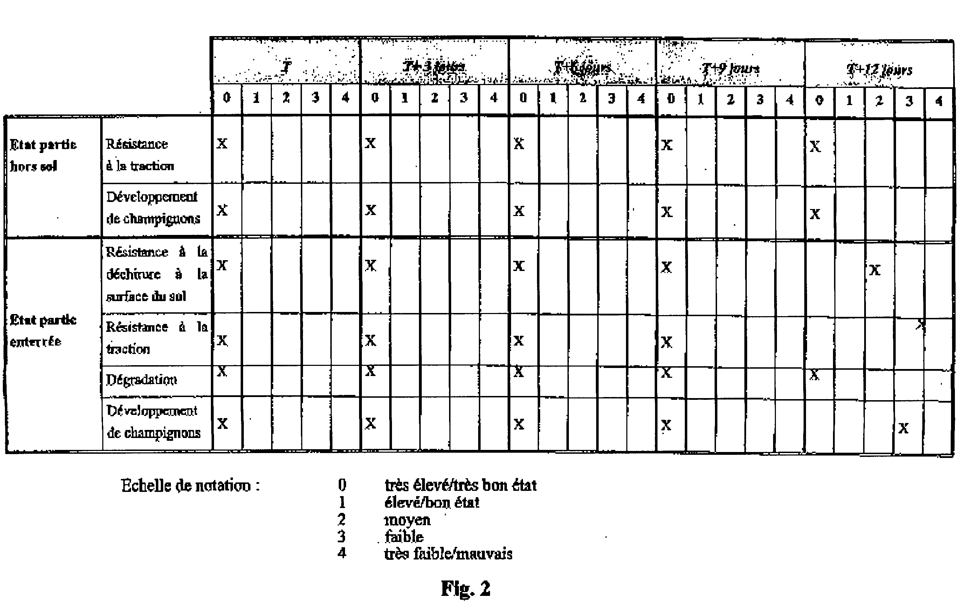

Les relevés ont été effectués tous les trois jours, ce qui correspond à l'échelle plein champ à un relevé tous les neuf jours. Les résultats apparaissent dans le tableau représenté sur la figure 2.

Comme le montre ce tableau, la présence dans la composition du papier d'un fongicide permet d'éviter tout développement de champignons sur la période de dix jours de culture, c'est-à-dire trente jours en plein champ.

De même, la résistance à la déchirure de la partie enterrée est encore satisfaisante au bout de trente jours de culture, de même que la résistance à la traction.

En revanche, on n'observe aucune dégradation de la partie enterrée du papier, ce qui permet de confirmer que la résine augmente considérablement la résistance du papier aux intempéries.

### D/ DEGRADATION DU PAPIER

On prépare une solution enzymatique comprenant en poids :
- 15 % de cellulase
- 30 % d'amidase
- 30 % d'estérase
- 25 % d'aminase

La solution obtenue est diluée à 1 %, puis pulvérisée sur le papier et les résidus de végétaux à l'issue de la récolte, à raison de 10 à 100 g/m². Le terrain est ensuite labouré.

On obtient une dégradation de la totalité du papier de paillage en moins de 15 jours.

L'invention et les avantages qui en découlent ressortent bien de la description qui précède.

On notera en particulier l'avantage que procure le papier de l'invention en permettant de par sa composition et notamment de par la présence de résine, de lui conférer un caractère de résistance aux intempéries tout en étant apte à être dégradé très rapidement en une quinzaine de jours à l'issue de la récolte, soit par arrosage d'une solution enzymatique, soit par éclatement des microcapsules de ladite solution enzymatique contenue dans le papier suite au labourage du terrain.

Dès lors, le cultivateur dispose d'un terrain propre à un coût très réduit dans la mesure où il n'est plus question de retirer le paillage à l'issue de la récolte. Au contraire, la réintégration dans le sol des déchets végétaux constitue un excellent engrais vert.

## Revendications

1. Procédé de dégradation accélérée de papier de paillage, dont les fibres de cellulose sont imprégnées d'une résine hydrophobe conférant audit papier un caractère de résistance aux intempéries, selon lequel on pulvérise sur le papier une solution enzymatique apte à dégrader à la fois la résine et la cellulose.

2. Procédé selon la revendication 1, **caractérisé en ce que** la résine est choisie dans le groupe comprenant les résines urée-formaldéhydes, les résines mélamine-formaldéhydes, les résines polyamide-amine-épichlorhydrines, les résines polyéthylène-imines, les dérivés de l'amidon, seuls ou en mélange.

3. Procédé selon l'une des revendications précédentes, **caractérisé en ce que** la solution enzymatique comprend des enzymes susceptibles de catalyser l'hydrolyse des liaisons résine-resine, résine-cellulose, cellulose-cellulose.

4. Procédé selon la revendication 3, **caractérisé en ce que** les enzymes sont choisies dans le groupe comprenant les estérases, les cellulases, les amidases et les aminases.

5. Procédé selon la revendication 4, **caractérisé en ce que** les cellulases sont choisies dans le groupe comprenant les exocellobiohydrolases, les endoglucanases, et les β-glucosidases.

6. Procédé selon l'une des revendications 1 à 5 **caractérisé en ce que** la solution enzymatique est pulvérisée sur le papier à raison de 0,01 à 1 g d'enzyme pure par m² de papier.

7. Utilisation d'un papier de paillage dont les fibres de cellulose sont imprégnées d'une résine hydrophobe apte à être dégradée par une solution enzymatique conférant audit papier un caractère de résistance aux intempéries, pour la mise en oeuvre du procédé objet de l'une des revendications 1 à 6.

8. Utilisation selon la revendication 7, **caractérisé en ce qu'**il comprend une composition fibreuse comprenant en poids :
• de 40 à 60 % de pâte de papier kraft écrue de résineux ;
• de 10 à 30 % de pâte de papier kraft écrue de feuillus ;
• de 20 à 40 % de pâtes désencrées d'emballage.

9. : Utilisation selon la revendication 8, **caractérisé en ce qu'**il comprend en outre de 0.5 à 15% de résine en poids par rapport au poids du papier, avantageusement de 7 à 8%.

10. Utilisation selon la revendication 9, **caractérisé en ce qu'**il comprend en outre un agent fongistatique.

11. Utilisation selon la revendication 10, **caractérisé en ce qu'**il se présente sous forme crêpée.

12. Solution enzymatique pour la mise en oeuvre du procédé objet de l'une des revendications 1 à 6, **caractérisée en ce qu'**elle comprend en poids :
• de 10 à 20 % de cellulase
• de 15 à 40 % d'amidase
• de 15 à 40 % d'estérase
• de 10 à 35 % d'aminase

13. Papier de paillage apte à se dégrader rapidement après enfouissement dans le sol, dont les fibres de cellulose sont imprégnées d'une résine hydrophobe conférant audit papier un caractère de résistance aux intempéries, **caractérisés en ce qu'**il comprend en outre des microcapsules remplies d'une solution enzymatique, dont les parois sont rompues lors de l'enfouissement dans le sol, libérant ainsi les enzymes aptes à catalyser à la fois l'hydrolyse de la résine, et celle de la cellulose.

14. Papier selon la revendication 13, **caractérisé en ce que** la résine est choisie dans le groupe comprenant les résines urée-formaldéhydes, les résines mélamine-formaldéhydes, les résines polyamide-amine-épichlorhydrines, les résines polyéthylène-imines, les dérivés de l'amidon, seuls ou en mélange.

15. Papier selon la revendication 14, **caractérisé en ce que** la solution enzymatique comprend des enzymes susceptibles de catalyser l'hydrolyse des liaisons résine-resine, résine-cellulose, cellulose-cellulose.

16. Papier selon la revendication 15, **caractérisé en ce que** les enzymes sont choisies dans le groupe comprenant les estérases, les cellulases, les amidases et le aminases.

17. Papier selon l'une des revendications 13 à 16, **caractérisé en ce qu'**il comprend en outre une composition fibreuse comprenant en poids :
• de 40 à 60 % de pâte de papier kraft écrue de résineux ;
• de 10 à 30 % de pâte de papier kraft écrue de feuillus ;
• de 20 à 40 % de pâtes désencrées d'emballage.

18. Papier selon l'une des revendications 13 à 17, **caractérisé en ce qu'**il comprend en outre de 0,5 à 15 % de résine en poids par rapport au poids du papier, avantageusement de 7 à 8 %

## Claims

1. Process for the accelerated degradation of mulching paper whose cellulose fibres are impregnated with a hydrophobic resin giving the said paper a weather-resistant character, in which an enzymatic solution capable of degrading both the resin and the cellulose is sprayed onto the paper.

2. Process according to Claim 1, **characterized in that** the resin is chosen from the group comprising urea-formaldehyde resins, melamine-formaldehyde resins, polyamide-amine-epichlorohydrin resins, polyethyleneimine resins and starch derivatives, by themselves or as a mixture.

3. Process according to either of the preceding claims, **characterized in that** the enzymatic solution comprises enzymes capable of catalyzing the hydrolysis of the resin-resin, resin-cellulose and cellulose-cellulose bonds.

4. Process according to Claim 3, **characterized in that** the enzymes are chosen from the group comprising esterases, cellulases, amidases and aminases.

5. Process according to Claim 4, **characterized in that** the cellulases are chosen from the group comprising exocellobiohydrolases, endoglucanases and β-glucosidases.

6. Process according to one of Claims 1 to 5, **characterized in that** the enzymatic solution is sprayed onto the paper in an amount of 0.01 to 1 g of pure enzyme per m² of paper.

7. Use of a mulching paper whose cellulose fibres are impregnated with a hydrophobic resin able to be degraded by an enzymatic solution given the said paper a wheather resistant character for implementing the process forming the subject of one of Claims 1 to 6.

8. Use according to Claim 7, **characterized in that** it comprises a fibrous composition containing, by weight:
• from 40 to 60% coniferous unbleached kraft paper pulp;
• from 10 to 30% deciduous unbleached kraft paper pulp;
• from 20 to 40% deinked packaging pulp.

9. Use according to Claim 8, **characterized in that** it furthermore contains from 0.5 to 15%, advantageously from 7 to 8%, resin by weight with respect to the weight of the paper.

10. Use according to Claim 9, **characterized in that** it furthermore contains a fongistatic agent.

11. Use according to Claim 10, **characterized in that** it is in the form of creped paper.

12. Enzymatic solution for implementing the process forming the subject of one of Claims 1 to 6, **characterized in that** it comprises by weight:
• from 10 to 20% cellulase;
• from 15 to 40% amidase;
• from 15 to 40% esterase;
• from 10 to 35% aminase.

13. Mulching paper capable of rapidly degrading after being buried in soil, the cellulose fibres of which are impregnated with a hydrophobic resin giving the said paper a weather-resistant character, **characterized in that** it furthermore comprises microcapsules filled with an enzymatic solution, the walls of which microcapsules are broken during burying in the soil, thus releasing the enzymes capable of catalyzing both the hydrolysis of the resin and that of the cellulose.

14. Mulching paper according to Claim 13, **characterized in that** the resin is chosen from the group comprising urea-formaldehyde resins, melamine-formaldehyde resins, polyamide-amine-epichlorohydrin resins, polyethyleneimine resins and starch derivatives, by themselves or as a mixture.

15. Mulching paper according to Claim 14, **characterized in that** the enzymatic solution comprises enzymes capable of catalyzing the hydrolysis of the resin-resin, resin-cellulose and cellulose-cellulose bonds.

16. Mulching paper according to Claim 15, **characterized in that** the enzymes are chosen from the group comprising esterases, cellulases, amidases and aminases.

17. Mulching paper according to one of Claims 13 to 16, **characterized in that** it furthermore comprises a fibrous composition containing by weight:
• from 40% to 60% coniferous unbleached kraft paper pulp;
• from 10 to 30% deciduous unbleached kraft paper pulp;
• from 20 to 40% deinked packaging pulps.

18. Mulching paper according to one of Claims 13 to 17, **characterized in that** it furthermore comprises from 0.5 to 15%, advantageously from 7 to 8%, resin by weight with respect to the weight of the paper.

## Patentansprüche

1. Verfahren zum beschleunigten Abbau von Mulchpapier, dessen Cellulosefasern mit einem hydrophoben Harz getränkt sind, das dem Papier einen witterungsbeständigen Charakter verleiht, bei welchem man auf das Papier eine enzymatische Lösung aufsprüht, die gleichzeitig das Harz und die Cellulose abbauen kann.

2. Verfahren nach Anspruch 1, **dadurch gekennzeichnet, dass** das Harz aus der Gruppe ausgewählt ist, die Harnstoff-Formaldehyd-Harze, Melamin-Formaldehyd-Harze, PolyamidAmin-Epichlorhydrin-Harze, Polyethylen-Imin-Harze, Stärkederivate allein oder in Mischung umfasst.

3. Verfahren nach einem der vorhergehenden Ansprüche, **dadurch gekennzeichnet, dass** die enzymatische Lösung Enzyme umfasst, die die Hydrolyse der Harz-Harz-, Harz-Cellulose-, Cellulose-Cellulose-Bindungen katalysieren können.

4. Verfahren nach Anspruch 3, **dadurch gekennzeichnet, dass** die Enzyme aus der Gruppe ausgewählt sind, die Esterasen, Cellulasen, Amidasen und Aminasen umfasst.

5. Verfahren nach Anspruch 4, **dadurch gekennzeichnet, dass** die Cellulasen aus der Gruppe ausgewählt sind, die die Exocellobiohydrolasen, die Endoglucanasen und die β-Glucosidasen umfasst.

6. Verfahren nach einem der Ansprüche 1 bis 5, **dadurch gekennzeichnet, dass** die enzymatische Lösung auf das Papier in einer Menge von 0,01 bis 1 g reines Enzym pro m² Papier aufgesprüht wird.

7. Verwendung eines Mulchpapiers, dessen Cellulosefasern mit einem hydrophoben Harz getränkt sind, das durch eine enzymatische Lösung abgebaut werden kann, die dem Papier einen witterungsbeständigen Charakter verleiht, für die Durchführung des Verfahrens nach einem der Ansprüche 1 bis 6.

8. Verwendung nach Anspruch 7, **dadurch gekennzeichnet, dass** es eine Faserzusammensetzung umfasst, die in Gewicht umfasst:
- 40 bis 60 % ungebleichter Weichholz-Kraftpapierstoff;
- 10 bis 30 % ungebleichter Laubholz-Kraftpapierstoff;
- 20 bis 40 % von Druckfarbe befreite Packpapierstoffe.

9. Verwendung nach Anspruch 8, **dadurch gekennzeichnet, dass** es außerdem 0,5 bis 15 Gew.-% Harz, bezogen auf das Gewicht des Papiers, vorteilhafterweise 7 bis 8 %, umfasst.

10. Verwendung nach Anspruch 9, **dadurch gekennzeichnet, dass** es außerdem ein Fungistatikum umfasst.

11. Verwendung nach Anspruch 9, **dadurch gekennzeichnet, dass** es in gekreppter Form vorliegt.

12. Enzymatische Lösung zur Durchführung des Verfahrens nach einem der Ansprüche 1 bis 6, **dadurch gekennzeichnet, dass** sie in Gewicht umfasst:
- 10 bis 20 % Cellulase
- 15 bis 40 % Amidase
- 15 bis 40 % Esterase
- 10 bis 35 % Aminase.

13. Mulchpapier, das nach Vergraben im Boden schnell abgebaut werden kann und dessen Cellulosefasern mit einem hydrophoben Harz getränkt sind, das dem Papier einen witterungsfesten Charakter verleiht, **dadurch gekennzeichnet, dass** es außerdem mit einer enzymatischen Lösung gefüllte Mikrokapseln umfasst, deren Wände bei dem Vergraben im Boden gebrochen werden, so dass die Enzyme freigesetzt werden, die gleichzeitig die Hydrolyse des Harzes und die der Cellulose katalysieren können.

14. Papier nach Anspruch 13, **dadurch gekennzeichnet, dass** das Harz aus der Gruppe ausgewählt ist, die Harnstoff-Formaldehyd-Harze, Melamin-Formaldehyd-Harze, PolyamidAmin-Epichlorhydrin-Harze, Polyethylen-Imin-Harze, Stärkederivate allein oder in Mischung umfasst.

15. Papier nach Anspruch 14, **dadurch gekennzeichnet, dass** die enzymatische Lösung Enzyme umfasst, die die Hydrolyse der Harz-Harz-, Harz-Cellulose-, Cellulose-Cellulose-Bindungen katalysieren können.

16. Papier nach Anspruch 15, **dadurch gekennzeichnet, dass** die Enzyme aus der Gruppe ausgewählt sind, die die Esterasen, die Cellulasen, die Amidasen und die Aminasen umfasst.

17. Papier nach einem der Ansprüche 13 bis 16, **dadurch gekennzeichnet, dass** es außerdem eine Faserzusammensetzung umfasst, die in Gewicht umfasst:
- 40 bis 60 % ungebleichter Weichholz-Kraftpapierstoff;
- 10 bis 30 % ungebleichter Laubholz-Kraftpapierstoff;
- 20 bis 40 % von Druckfarbe befreite Packpapierstoffe.

18. Papier nach einem der Ansprüche 13 bis 17, **dadurch gekennzeichnet, dass** es außerdem 0,5 bis 15 Gew.-% Harz, bezogen auf das Gewicht des Papiers, vorteilhafterweise 7 bis 8 %, umfasst.
